# EUROPÄISCHE PATENTANMELDUNG

(11) **EP 1 239 150 A2**
(43) Veröffentlichungstag der Anmeldung: **11.09.2002**
(21) Anmeldenummer: 02003089.6
(22) Anmeldetag: 13.02.2002
(51) Int. Cl.: F03D 11/04

(54) **Transportable Arbeitsvorrichtung mit Hebegerät für Arbeiten an einer Windkraftanlage**

(30) Priorität: 09.03.2001 DE 10111523
(71) Anmelder: Keller, Erwin, 97215 Uffenheim (DE)
(72) Erfinder: Keller, Erwin, 97215 Uffenheim (DE)
(74) Vertreter: Abel, Martin, Dipl.-Ing.

(57) **Zusammenfassung**

Es wird eine transportable Arbeitsvorrichtung vorgeschlagen, die ein Hebegerät (8) für Arbeiten am Kopf (3) einer einen Mast (2) aufweisenden Windkraftanlage (1) aufweist. Das Hebegerät (8) besitzt eine Halterung (18) zur lösbaren Befestigung am Mast (2) unterhalb des Kopfes (3). Ferner verfügt sie über eine mit einer Hebeeinrichtung (25) ausgestattete, an der Halterung (18) schwenkbar gelagerte Arbeitseinheit (19), die aus einer während der Montage der Halterung (18) eingenommenen, nach unten hängenden Transportstellung in eine den Kopf (3) der Windkraftanlage (1) übergreifende Arbeitsstellung verschwenkbar ist.

## Beschreibung

Die Erfindung betrifft eine transportable Arbeitsvorrichtung mit Hebegerät für Arbeiten am Kopf einer einen Mast aufweisenden Windkraftanlage, insbesondere an deren Antriebseinheit.

Der Kopf einer Windkraftanlage ist regelmäßig mit einer der Stromerzeugung dienenden Antriebseinheit ausgestattet, die ein meist mit einem Generator ausgestattetes Maschinengehäuse und einen am Maschinengehäuse gelagerten, durch Windkraft zu einer Rotationsbewegung antreibbaren Rotor aufweist.

Bei der Montage der Antriebseinheit an der Mastspitze und bei später im Betrieb einen Teileaustausch erforderlich machenden Reparaturarbeiten werden bisher mobile Autokrane verwendet, deren Einsatz relativ teuer ist. Auch gelangen Autokrane an die Grenzen ihrer Einsatzmöglichkeiten, wenn Windkraftanlagen mit sehr großen Masthöhen betroffen sind.

Es ist die Aufgabe der vorliegenden Erfindung, Maßnahmen zu treffen, mit denen sich Arbeiten am Kopf einer Windkraftanlage selbst bei großen Masthöhen einfacher und kostengünstiger durchführen lassen.

Zur Lösung dieser Aufgabe ist vorgesehen, dass das Hebegerät eine Halterung zur lösbaren Befestigung am Mast im Bereich unterhalb des Kopfes aufweist und eine mit einer Hebeeinrichtung ausgestattete, an der Halterung schwenkbar gelagerte Arbeitseinheit enthält, die bei am Mast befestigter Halterung aus einer während der Montage der Halterung eingenommenen, nach unten hängenden Transportstellung in eine den Kopf übergreifende Arbeitsstellung verschwenkbar ist.

Die erfindungsgemäße Arbeitsvorrichtung sieht die Installation eines mit einer Hebeeinrichtung ausgestatteten Hebegerätes direkt am Mast vor, und zwar im Bereich des von den auszuführenden Arbeiten betroffenen Kopfes, so dass ein optimaler Einsatz möglich ist. Das Hebegerät ist transportabel und lässt sich problemlos zu wechselnden Einsatzorten transportieren. Vor Ort kann es auf beliebige geeignete Weise an der gewünschten Montagestelle am Mast platziert werden, wo es mit seiner Halterung zu befestigen ist. Das Hochbringen zur Montagestelle gestaltet sich relativ einfach, weil die die Hebeeinrichtung enthaltende Arbeitseinheit hierbei nach unten hängen kann, so dass eine günstige Schwerpunktlage erreicht wird. Nach der mastseitigen Montage der Halterung ist die Arbeitseinheit lediglich noch aus der Transportstellung in die Arbeitsstellung zu verschwenken, in der sie den Kopf der Windkraftanlage übergreift, so dass die Hebeeinrichtung eine für die auszuführenden Arbeiten optimale Position einnimmt.

Zum Platzieren an der vorgesehenen Montagestelle ist die Arbeitsvorrichtung zweckmäßigerweise mit einer Aufzugeinrichtung ausgestattet, die sich zwischen dem Mast und dem Boden in der Nachbarschaft des Mastes installieren lässt. Sie verfügt zweckmäßigerweise über eine Führungsseilanordnung, deren oberes Ende sich auch bei großen Masthöhen relativ einfach im Bereich der Montagestelle am Mast verankern lässt und der entlang das Hebegerät, vorzugsweise unter Verwendung einer mit einer Seilwinde antriebsgekoppelten Zugseilanordnung, bequem vom Boden aus zur Montagestelle am Mast hochgezogen werden kann.

Die Hebeeinrichtung ist vorzugsweise an einer bei Einnahme der Arbeitsstellung der Arbeitseinheit horizontal ausgerichteten Schienenanordnung horizontal verstellbar geführt, so dass sich ihre Position oberhalb des Kopfes nach Bedarf variieren lässt.

Um Bauteile vom Kopf der Windkraftanlage zum Boden ablassen oder vom Boden hoch zum Kopf transportieren zu können, enthält die Hebeeinrichtung zweckmäßigerweise eine insbesondere elektromotorisch betriebene Seilzugeinrichtung.

Eine hohe Stabilität, vorzugsweise verbunden mit einer gewissen Schutzfunktion für den Kopf der Windkraftanlage, wird erreicht, wenn die Arbeitseinheit des Hebegerätes einen das Maschinengehäuse der Antriebseinheit.in der Arbeitsstellung zumindest seitlich und oben, vorzugsweise auch unten, umrahmenden Tragrahmen aufweist.

Das Verschwenken der Arbeitseinheit zwischen der Transportstellung und der Arbeitsstellung geht besonders einfach vonstatten, wenn zwischen die Halterung und die Arbeitseinheit des Hebegerätes geeignete Betätigungsmittel zwischengeschaltet sind, insbesondere mechanische oder maschinelle Betätigungsmittel und vorzugsweise in Gestalt von durch Fluidkraft aktivierbaren Arbeitszylindern.

Weitere vorteilhafte Maßnahmen ergeben sich aus der nachstehenden Beschreibung eines bevorzugten Ausführungsbeispiels der erfindungsgemäßen Arbeitsvorrichtung. Es zeigen im einzelnen:
- Fig. 1: die an einer Windkraftanlage installierte Arbeitsvorrichtung mit zwei Montagephasen des Hebegerätes, zum einen während des Hochziehens zur beabsichtigten Montagestelle und zum andern im unter Einnahme der Transportstellung an der Montagestelle montierten Zustand des Hebegerätes,
- Fig. 2 und 3: verschiedene Phasen der Schwenkbewegung beim Verschwenken der Arbeitseinheit relativ zu der am Mast befestigten Halterung in Richtung der gewünschten Arbeitsstellung,
- Fig. 4: die Windkraftanlage bei in die Arbeitsstellung verschwenkter Arbeitseinheit des Hebegerätes,
- Fig. 5: die Anordnung aus Fig. 4 in Vorderansicht mit Blickrichtung gemäß Pfeil V in Achsrichtung des Rotors der Antriebseinheit und
- Fig. 6: die Windkraftanlage mit installiertem Hebegerät bei in der Arbeitsstellung befindlicher Arbeitseinheit, wie die Fig. 1 bis 4 in Seitenansicht, wobei ein Arbeitsvorgang unter Einsatz der Hebeeinrichtung in Verbindung mit der Demontage des Rotors illustriert ist.

In den Figuren ist jeweils eine allgemein mit Bezugsziffer 1 bezeichnete Windkraftanlage dargestellt, die einen auch als Turm bezeichenbaren Mast 2 aufweist und an deren an der Mastspitze vorgesehenem Kopf 3 eine Antriebseinheit 4 angeordnet ist.

Die Antriebseinheit 4 verfügt über ein an der Spitze des Mastes 2 verankertes Maschinengehäuse 5, in dem sich ein nicht näher dargestellter Generator befindet. Ferner verfügt die Antriebseinheit 4 über einen relativ zum Maschinengehäuse 5 drehbaren Rotor 6, der durch auftretende Windkräfte zu einer Rotationsbewegung antreibbar ist, auf deren Basis vom Generator Strom erzeugt wird.

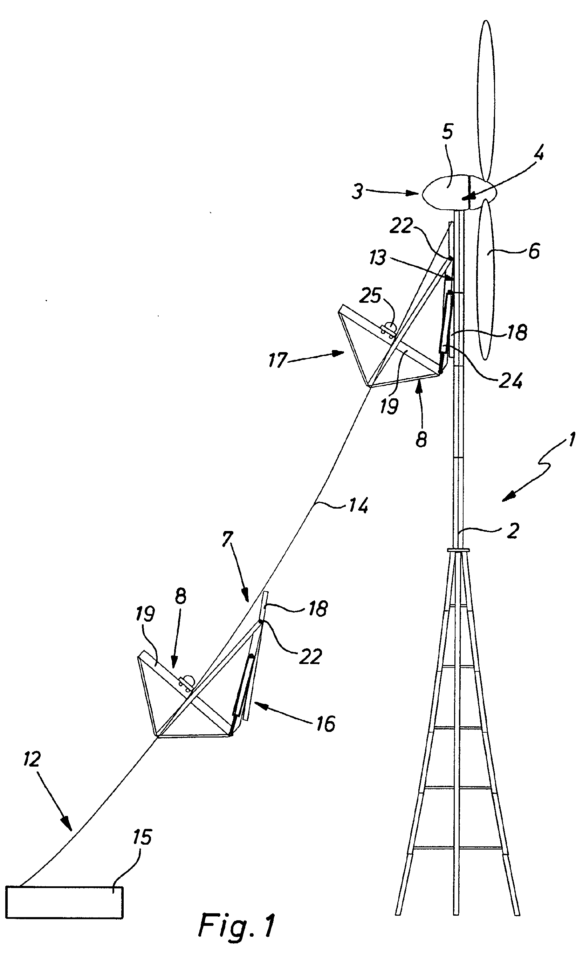

Aus Fig. 1 geht des Weiteren eine in ihrer Allgemeinheit mit Bezugsziffer 7 bezeichnete transportable Arbeitsvorrichtung hervor, die geeignet ist, um am Kopf 3 der Windkraftanlage 1 notwendige Arbeiten auszuführen, beispielsweise Montage- und Reparaturarbeiten betreffend die Antriebseinheit 4.

Die Arbeitsvorrichtung 7 enthält ein transportables Hebegerät 8 und eine zu deren Montage und Demontage am Mast 2 der Windkraftanlage 1 verwendete Aufzugeinrichtung 12. Letztere ist der Einfachheit halber nur in Fig. 1 abgebildet.

Das Hebegerät 8 ist zweckmäßigerweise eine Stahlkonstruktion. Es kann sehr leicht durch ein Fahrzeug vor Ort zu derjenigen Windkraftanlage 1 verbracht werden, an der die Arbeiten auszuführen sind. Gleiches gilt für die Aufzugeinrichtung 12.

Im betriebsbereiten Zustand ist das Hebegerät 8 an einer Montagestelle 13 in geeigneter Höhe am Mast 2 befestigt. Die Montagestelle 13 liegt mit geringem Abstand unterhalb des Kopfes 3.

Mit der Aufzugeinrichtung 12 kann das Hebegerät 8 im Bereich der beabsichtigten Montagestelle 13 platziert werden. Hierzu enthält die Aufzugeinrichtung 12 beim Ausführungsbeispiel eine in Fig. 1 schematisch angedeutete Führungsseilanordnung 14, die über ein oder mehrere Führungsseile verfügt und im betriebsbereiten Zustand schräg ansteigend zwischen dem Boden neben dem Mast 2 und dem Bereich der vorgesehenen Montagestelle 13, vorzugsweise oberhalb dieser, verläuft. Zur Installation am Mast 2 ist lediglich das obere Ende der Führungsseilanordnung 14 an der dafür vorgesehenen Stelle am oberen Mastendbereich zu fixieren.

Die bodenseitige Fixierung erfolgt vorzugsweise an einer schematisch angedeuteten Basisstation 15 der Aufzugeinrichtung 12.

Zur Positionierung an der vorgesehenen Montagestelle 13 wird das Hebegerät 8 vom Boden aus der Führungsseilanordnung 14 entlang zum Mast hochgezogen. Die Fig. 1 zeigt bei 16 eine Zwischenposition des Hebegerätes 8 beim Hochziehen und bei 17 die Endposition des Hebegerätes 8 bei erreichter Montagestelle 13.

Zum Hochziehen des Hebegerätes 8 ist die Aufzugeinrichtung 12 zusätzlich mit einer in der Zeichnung nicht näher dargestellten Zugseilanordnung ausgestattet, die ebenfalls zwischen der Basisstation 15 und einer Stelle im Bereich der Montagestelle 13 des Mastes 2 verläuft und maschinell antreibbar ist, insbesondere durch eine an der Basisstation 15 vorgesehene und ebenfalls nicht näher dargestellte Seilwinde. Die aus einem oder mehreren Seilen bestehende Zugseilanordnung kann am Hebegerät 8 befestigt werden, so dass dieses bei entsprechend angetriebener Zugseilanordnung zur Montagestelle 13 hochgezogen wird.

In umgekehrter Weise kann das Hebegerät 8 bei der Deinstallation wieder vom Mast 2 heruntergeholt werden.

Es ist möglich, die Zugseilanordnung in Baueinheit mit der Führungsseilanordnung 14 auszuführen, um sowohl den baulichen Aufwand als auch den Montageaufwand gering zu halten.

Das Hebegerät 8 selbst verfügt über zwei relativ zueinander verschwenkbare Komponenten in Gestalt einer Halterung 18 und einer Arbeitseinheit 19. Die Halterung 18 hat zweckmäßigerweise eine langgestreckte Bauform mit plattenartigem und/oder rahmenartigem Aufbau und ist vorgesehen, um an der Montagestelle 13 unterhalb des Kopfes 3 am Mast 4 lösbar befestigt zu werden. Die hierzu vorgesehenen Befestigungsmittel orientieren sich unter anderem am Aufbau des Mastes 2 und können beispielsweise eine Klemmvorrichtung enthalten. Es ist auch möglich, im Bereich der Montagestelle 13 am Mast 2 bereits bei der Errichtung desselben geeignete Befestigungsmittel vorzusehen, mit denen sich die an der Halterung 18 vorgesehenen Befestigungsmittel leicht koppeln lassen, beispielsweise durch Einhängen und/oder durch Verschrauben.

Die Halterung 18 wird so am Mast 2 montiert, dass ihre Längsachse in der Höhenrichtung des Mastes 2 ausgerichtet ist.

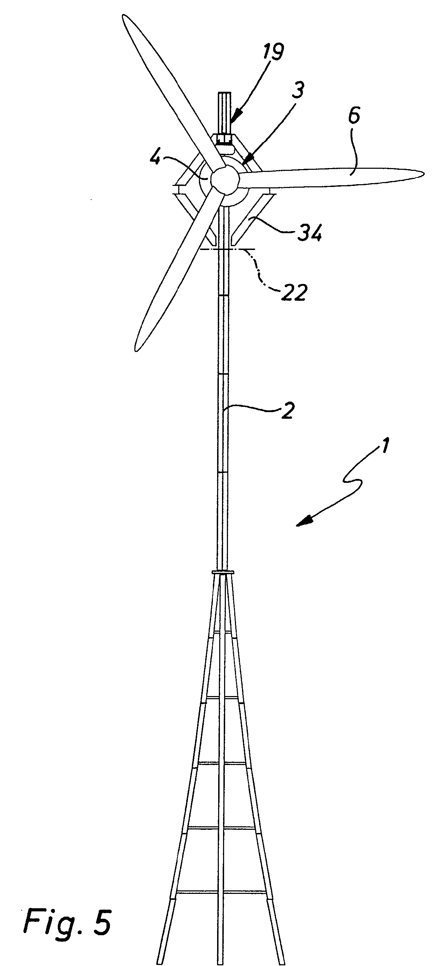

Die Schwenkachse 22 für die relativ zur Halterung 18 verschwenkbare Arbeitseinheit 19 verläuft bei am Mast 2 montierter Halterung 18 horizontal. Ihre Lage und Ausrichtung ist in Fig. 5 strichpunktiert angedeutet.

Die Arbeitseinheit 19 verfügt über einen gestellartigen Aufbau mit haubenähnlichem Charakter. Während des Transportes des Hebegerätes 8 vom Boden zur vorgesehenen Montagestelle 13 und auch bei der mastseitigen Montage der Halterung 18 nimmt die Arbeitseinheit 19 eine Transportstellung ein, in der sie ausgehend von der Schwenkachse 22 nach unten hängt, insbesondere mit einer leichten Schrägstellung.

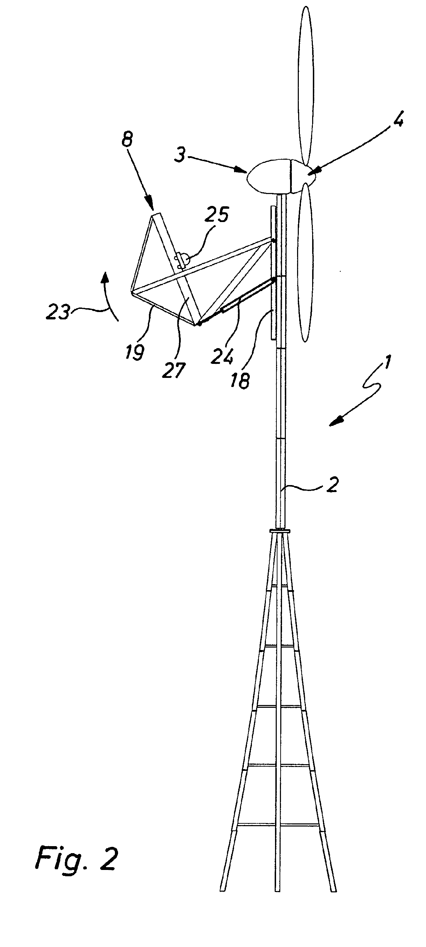

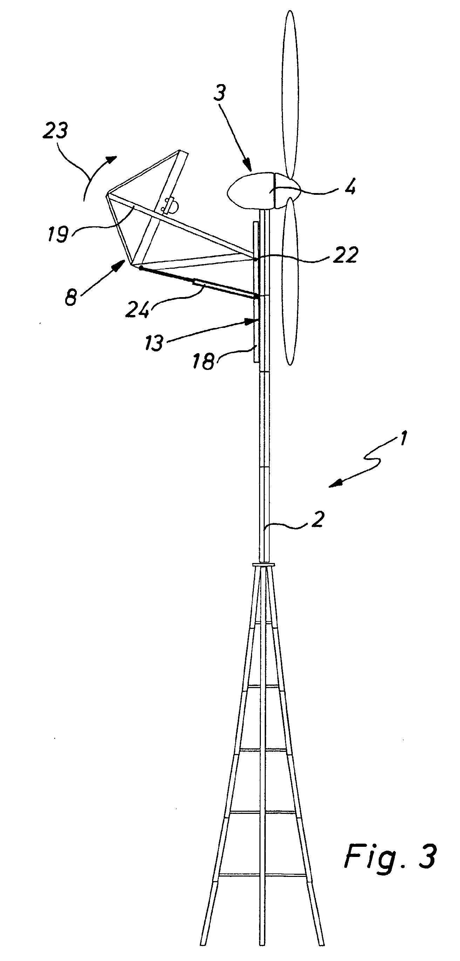

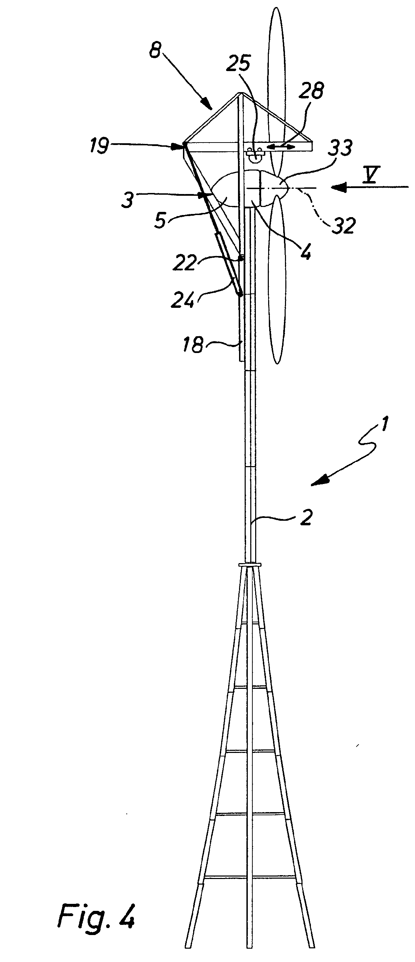

Nach erfolgter Befestigung der Halterung 18 am Mast 2 kann die Arbeitseinheit 19 aus der nach unten hängenden Transportstellung in eine aus Fig. 4, 5 und 6 ersichtliche, den Kopf 3 der Windkraftanlage 1 übergreifende Arbeitsstellung verschwenkt werden. Verschiedene Phasen der Schwenkbewegung gehen aus Fig. 2 und 3 hervor, in denen die Schwenkrichtung durch Pfeil 23 verdeutlicht ist.

Mittels nicht näher dargestellter Sicherungsmittel kann die Arbeitseinheit 19 in der Arbeitsstellung so arretiert werden, dass eine weitere Schwenkbewegung oder ein unbeabsichtigtes Zurückschwenken in die Transportstellung ausgeschlossen ist.

Wie aus Fig. 4 deutlich wird, wird der Kopf 3 von der die Arbeitsstellung einnehmenden Arbeitseinheit 19 von der die Montagestelle 13 aufweisenden Montageseite her zur entgegengesetzten Mastseite hin kappenartig übergriffen.

Zweckmäßigerweise befindet sich die die Montagestelle 13 aufweisende Montageseite an der der Rückseite der Antriebseinheit 4 zugeordneten Seite des Mastes 2, also auf der dem Rotor 6 entgegengesetzten Seite. Da die Antriebseinheit 4 in der Regel um eine vertikale Achse verschwenkbar am Mast 2 fixiert ist, lässt sich diese Anordnung bequem dadurch erreichen, dass man die Antriebseinheit 4 vor der Installation des Hebegerätes 8 entsprechend positioniert.

Während die Arbeitseinheit 19 in der Transportstellung komplett unterhalb der Schwenkachse 22 liegt, befindet sie sich in der Arbeitsstellung zweckmäßigerweise komplett oberhalb dieser Schwenkachse 22.

Die Schwenkbewegung zwischen der Transportstellung und der Arbeitsstellung wird, zweckmäßigerweise in beiden Richtungen, durch geeignete Betätigungsmittel 24 unterstützt oder hervorgerufen. Denkbar wären beispielsweise mechanische Antriebsmittel mit einem Getriebe und/oder geeignet gelagerten Hebeln und einem Antrieb durch einen Kurbelmechanismus oder motorisch. Beim Ausführungsbeispiel enthalten die Betätigungsmittel 24 einen oder mehrere, sich zwischen der Halterung 18 und der Arbeitseinheit 19 erstreckende Hydraulikzylinder, die durch eine Hydraulikpumpe betätigt werden können. Letztere kann sich an Bord des Hebegerätes 8 befinden, zusammen mit einem Elektromotor für den Antrieb, der seine Energie über Kabel vom Boden erhalten kann, oder durch einen unmittelbar an Bord des Hebegerätes 8 befindlichen Energiespeicher.

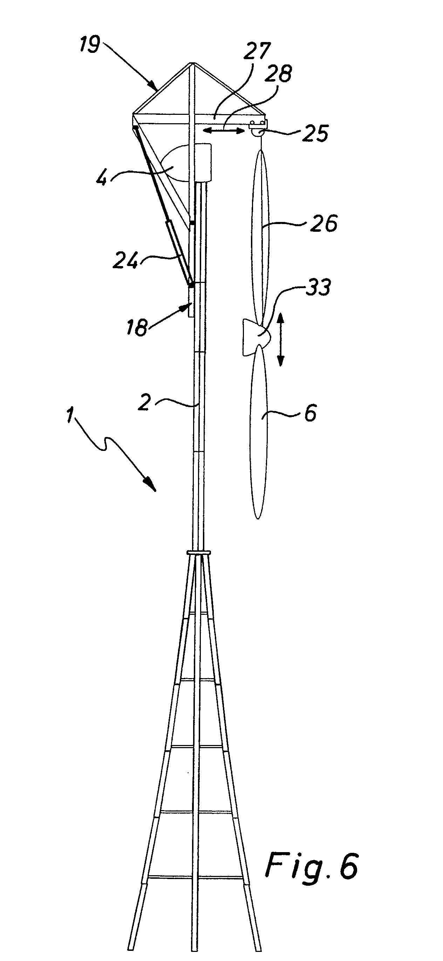

Die Arbeitseinheit 19 ist mit einer Hebeeinrichtung 25 ausgestattet, die zweckmäßigerweise eine mit einer Seilwinde ausgestattete Seilzugeinrichtung aufweist und in der Lage ist, ein Seil 26 zum Boden abzusenken und hochzuziehen, mit dessen Hilfe Maschinenteile zwischen dem Boden und dem Kopf 3 transportiert werden können. Die Fig. 6 zeigt exemplarisch einen Transport des vom Maschinengehäuse 5 abgekoppelten Rotors 6 vom Maschinengehäuse 5 zum Boden zum Zwecke von Reparaturarbeiten.

Die Hebeeinrichtung 25 ist an einer Schienenanordnung 27 der Arbeitseinheit 19 verstellbar geführt. Die Schienenanordnung 27 ist so platziert, dass sie in der Arbeitsstellung der Arbeitseinheit 19 oberhalb des Kopfes 3 liegt und horizontal ausgerichtet ist, so dass die Hebeeinrichtung 25 gemäß Doppelpfeil 28 horizontal verstellbar ist. Die Verstellrichtung 28 verläuft, in der Arbeitsstellung gesehen, zweckmäßigerweise parallel zur Drehachse 32 des Rotors 6, wobei die Schienenanordnung 27 zumindest so weit zur Vorderseite des Mastes 2 ragt, dass die Hebeeinrichtung 25 auf der der Montageseite für die Halterung 18 entgegengesetzten Mastseite platziert werden kann, insbesondere oberhalb des die Rotorflügel tragenden Zentralteils 33 des Rotors 6.

Die Hebeeinrichtung 25 kann zweckmäßigerweise nach Art einer Laufkatze an der Schienenanordnung 27 verstellbar sein, wobei die Verstellbewegung manuell oder motorisch ausgeführt werden kann.

Bei einer einfacheren Ausführungsform ist die Hebeeinrichtung 25 fix an der Arbeitseinheit 19 befestigt, und zwar vorzugsweise derart, dass sie in der Arbeitsstellung auf der der Montageseite für die Halterung 18 entgegengesetzten Mastseite liegt, insbesondere über dem Zentralteil 33 des Rotors 6.

Indem die Anordnung so getroffen ist, dass die Hebeeinrichtung 25 in der Arbeitsstellung der Arbeitseinheit 19 stets eine Position einnimmt oder in eine Position verbringbar ist, die höher als das Maschinengehäuse 5 und zweckmäßigerweise auch das Zentralteil 33 des Rotors 6 liegt, können sämtliche relevanten Maschinenteile der Antriebseinheit 4 an der Hebeeinrichtung 25 fixiert und zwischen dem Kopf 3 und dem Erdboden transportiert werden.

Wie aus Fig. 5 hervorgeht, verfügt die Arbeitseinheit 19 zweckmäßigerweise über einen rautenähnlich konfigurierten Tragrahmen 34, der die Antriebseinheit 4 im Bereich des Maschinengehäuses 5 in der Arbeitsstellung zumindest seitlich und oben, vorzugsweise auch unten, umrahmt. Auf diese Weise erhält die Arbeitseinheit eine besonders steife Struktur.

Nach Beendigung der Arbeiten lässt sich das Hebegerät 8 in entgegengesetzter Weise wie bei der Installation problemlos wieder deinstallieren.

## Patentansprüche

1. Transportable Antriebsvorrichtung mit Hebegerät für Arbeiten am Kopf einer einen Mast aufweisenden Windkraftanlage, insbesondere an deren Antriebseinheit, **dadurch gekennzeichnet, dass** das Hebegerät (8) eine Halterung (18) zur lösbaren Befestigung am Mast (2) im Bereich unterhalb des Kopfes (3) aufweist und eine mit einer Hebeeinrichtung (25) ausgestattete, an der Halterung (18) schwenkbar gelagerte Arbeitseinheit (19) enthält, die bei am Mast (2) befestigter Halterung (18) aus einer während der Montage der Halterung (18) eingenommenen, nach unten hängenden Transportstellung in eine den Kopf (3) übergreifende Arbeitsstellung verschwenkbar ist.

2. Arbeitsvorrichtung nach Anspruch 1, **dadurch gekennzeichnet, dass** die Hebeeinrichtung (25) derart an der Arbeitseinheit (19) angeordnet ist, dass sie in deren Arbeitsstellung auf der der Montageseite der Halterung (18) entgegengesetzten Mastseite platziert oder platzierbar ist.

3. Arbeitsvorrichtung nach Anspruch 1 oder 2, **dadurch gekennzeichnet, dass** die Hebeeinrichtung (25) an einer in der Arbeitsstellung horizontal ausgerichteten Schienenanordnung (27) der Arbeitseinheit (19) horizontal verstellbar angeordnet ist.

4. Arbeitsvorrichtung nach einem der Ansprüche 1 bis 3, **dadurch gekennzeichnet, dass** die Hebeeinrichtung (25) eine Seilzugeinrichtung aufweist.

5. Arbeitsvorrichtung nach einem der Ansprüche 1 bis 4, **dadurch gekennzeichnet, dass** die Hebeeinrichtung (25) in der Arbeitsstellung der Arbeitseinheit (19) eine Position einnimmt oder in eine Position verbringbar ist, die höher als das Maschinengehäuse (5) und/oder das Zentralteil (33) des Rotors (6) der Antriebseinheit (4) der Windkraftanlage (1) liegt.

6. Arbeitsvorrichtung nach einem der Ansprüche 1 bis 5, **dadurch gekennzeichnet, dass** die Arbeitseinheit (19) des Hebegerätes (8) einen das Maschinengehäuse (5) der Antriebseinheit (4) der Windkraftanlage (1) in der Arbeitsstellung zumindest seitlich und oben, vorzugsweise auch unten, umrahmenden Tragrahmen (34) aufweist.

7. Arbeitsvorrichtung nach einem der Ansprüche 1 bis 6, **gekennzeichnet durch** zwischen die Halterung (18) und die Arbeitseinheit des Hebegerätes (8) zwischengeschaltete Betätigungsmittel (24) zum Hervorrufen der Schwenkbewegung (23).

8. Arbeitsvorrichtung nach Anspruch 7, **dadurch gekennzeichnet, dass** die Betätigungsmittel (24) einen oder mehrere Hydraulikzylinder aufweisen.

9. Arbeitsvorrichtung nach einem der Ansprüche 1 bis 8, **dadurch gekennzeichnet, dass** die Arbeitseinheit (19) bei am Mast (2) montierter Halterung (18) in der Transportstellung schräg nach unten hängt.

10. Arbeitsvorrichtung nach einem der Ansprüche 1 bis 9, **dadurch gekennzeichnet, dass** die Arbeitseinheit (19) in der Transportstellung komplett unterhalb und in der Arbeitsstellung komplett oberhalb der Schwenkachse (22) liegt.

11. Arbeitsvorrichtung nach einem der Ansprüche 1 bis 10, **gekennzeichnet durch** eine zwischen dem Mast (2) und dem Boden installierbare Aufzugeinrichtung (12) zum Hochziehen des Hebegerätes (8) zur beabsichtigten Montagestelle (13).

12. Arbeitsvorrichtung nach Anspruch 11, **dadurch gekennzeichnet, dass** die Aufzugeinrichtung (12) eine zwischen dem Boden und dem Mast (2) verlegbare Führungsseilanordnung (14) enthält, der entlang das Hebegerät (8) zur beabsichtigten Montagestelle (13) hochziehbar ist.

13. Arbeitsvorrichtung nach Anspruch 11 oder 12, **dadurch gekennzeichnet, dass** die Aufzugeinrichtung (12) eine Zugseilanordnung zum Hochziehen des Hebegerätes (8) zur beabsichtigten Montagestelle (13) am Mast aufweist, die zweckmäßigerweise mit einer Seilwinde antriebsgekoppelt ist.
